(19)

**Europäisches Patentamt**
**European Patent Office**
**Office européen des brevets**

(11) **EP 4 328 993 A1**

(12) **EUROPEAN PATENT APPLICATION**
published in accordance with Art. 153(4) EPC

(43) Date of publication:
**28.02.2024 Bulletin 2024/09**

(21) Application number: **22893314.9**

(22) Date of filing: **15.11.2022**

(51) International Patent Classification (IPC):
*H01M 4/13* (2010.01)          *H01M 10/42* (2006.01)
*H01M 4/139* (2010.01)        *H01M 4/04* (2006.01)
*H01M 4/02* (2006.01)

(52) Cooperative Patent Classification (CPC):
**H01M 4/02; H01M 4/04; H01M 4/13; H01M 4/139;**
**H01M 10/42;** Y02E 60/10

(86) International application number:
**PCT/KR2022/017940**

(87) International publication number:
**WO 2023/085895 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.11.2021  KR 20210157005**
**14.11.2022  KR 20220151950**

(71) Applicant: **LG Energy Solution, Ltd.**
**Seoul 07335 (KR)**

(72) Inventors:
• **KIM, Soo Hyun**
**Daejeon 34122 (KR)**
• **YOON, Sung Pil**
**Daejeon 34122 (KR)**
• **LEE, Ung Ju**
**Daejeon 34122 (KR)**

(74) Representative: **Plasseraud IP**
**66, rue de la Chaussée d'Antin**
**75440 Paris Cedex 09 (FR)**

(54) **ELECTRODE AND ELECTRODE MANUFACTURING METHOD**

(57)    The present application relates to an electrode, a manufacturing method thereof, and a use thereof. The present application can provide an electrode having an insulating layer that stably secures desired insulation properties, and simultaneously exhibits excellent adhesion force, and does not cause cracks or the like at the boundary between the coated portion and the uncoated portion of the electrode, and a manufacturing method thereof. In the present application, the use of the electrode can also be provided.

[Figure 4]

**EP 4 328 993 A1**

**Description**

**Technical Field**

This application claims the benefit of priority based on Korean Patent Application No. 10-2021-0157005 dated November 15, 2021 and Korean Patent Application No. 10-2022-0151950 dated November 14, 2022, the disclosures of which are incorporated herein by reference in their entirety.
The present application relates to an electrode and a method for manufacturing the electrode.

**Background Art**

As the demand for mobile devices, electric vehicles, and the like increases, the demand for secondary batteries as an energy source also increases. Nickel hydride batteries, lithium batteries, lithium-ion batteries, and the like are known as secondary batteries.
In general, a secondary battery comprises an electrode assembly in which a positive electrode and a negative electrode coated with a positive electrode active material and a negative electrode active material, respectively are disposed between a separator, and an exterior material for hermetically accommodating the electrode assembly together with an electrolyte.
In the secondary battery, the separator positioned between the positive electrode and the negative electrode maintains electrical insulation, but there may be a stability problem due to a short circuit between the positive electrode and the negative electrode in an abnormal state. The abnormal state includes over charge or over discharge, dendritic growth of electrode materials, internal short-circuit caused by foreign substances, external force applied from the outside, penetration of the battery by sharp objects such as nails or screws, and the like.
As the separator, a porous membrane made of a polymer material such as polyolefin is mainly used, but such a porous membrane has no sufficient heat resisting temperature. Therefore, when the short circuit occurs, the separator shrinks due to reaction heat and the short circuit part expands, thereby generating more reaction heat, which may cause a thermal runaway problem.
In order to supplement such a problem, a technique of forming an insulating layer on a positive electrode uncoated portion and/or a boundary between the coated portion and the uncoated portion is known (Patent Document 1).
Here, the uncoated portion means a region on a current collector in which the electrode active material layer is not formed, and the coated portion means a region on a current collector in which the electrode active material layer is formed.
In the prior art, a polymer solution such as PVDF (poly(vinylidene fluoride)) is coated and dried to form an insulating layer. In this method, it is not easy to form an insulating layer having appropriate performance because a phenomenon in which the polymer penetrates the inside of the active material layer after coating and before drying occurs.
A method of coating a solution forming an insulating layer, and then performing rapid drying before the polymer penetrates the inside of the active material layer may also be considered, but in this case, the adhesion force of the formed insulating layer is lowered, and accordingly, there is also a problem that the performance of the insulating layer is reduced.

[Prior Art Documents]

[Patent Documents]

(Patent Document 1) Korean Laid-Open Patent Publication No. 10-2019-0093522

**Disclosure**

**Technical Problem**

It is an object of the present application to provide an electrode having an insulating layer that exhibits excellent adhesion force, and does not cause cracks or the like at a boundary between a coated portion and an uncoated portion of the electrode while stably securing the desired insulating property, and a method for manufacturing the same.
It is another object of the present application to provide a use of the electrode.

**Technical Solution**

Among the physical properties mentioned in this specification, when the measurement temperature affects the relevant physical property, the physical property is a physical property measured at room temperature, unless otherwise specified.

In this specification, the term room temperature is a natural temperature without particularly warming or cooling, which may mean any one temperature within a range of about 10°C to 30°C, for example, a temperature within the range of about 15°C or more, 18°C or more, 20°C or more, or about 23°C or more, and about 27°C or less. Unless otherwise specified, the unit of temperature referred to in this specification is °C.

Among the physical properties mentioned in this specification, when the measurement pressure affects the relevant physical property, the physical property is a physical property measured at normal pressure, unless otherwise specified.

In this specification, the term normal pressure is a pressure in a state without pressurization or depressurization, which generally means a pressure of about 740 mmHg to 780 mmHg or so as an atmospheric pressure level.

Among the physical properties mentioned in this specification, when the measurement humidity affects the relevant physical property, the physical property is a physical property measured at natural humidity under room temperature and normal pressure, unless otherwise specified.

The term thickness as used in the present application means an average thickness, unless otherwise specified.

An electrode according to one example of the present application may comprise a current collector and an active material layer formed on at least one side of the current collector. The active material layer may be formed on one side or both sides of the current collector. The electrode may be, for example, a negative electrode or a positive electrode of a secondary battery.

As the current collector, a known positive electrode current collector or negative electrode current collector may be used.

As the positive electrode current collector, one having appropriate conductivity without causing unnecessary chemical changes in the secondary battery may be used, and the type, size, and shape thereof are not particularly limited, which may be selected according to the applied uses. As the positive electrode current collector, for example, a film, sheet, foil, net, porous body, foam, or nonwoven fabric, and the like made of stainless steel, aluminum, nickel, titanium, or baked carbon, and the like, or a film, sheet, foil, net, porous body, foam, or nonwoven fabric, and the like, the surface of which is treated with carbon, nickel, titanium, or silver, and the like may be used. In some cases, fine irregularities may be formed on the surface of the positive electrode current collector to increase adhesion force with the positive electrode active material, and the like. The current collector may be in the form of a film, sheet, foil, net, porous body, foam, or nonwoven fabric, and the like.

The thickness of the positive electrode current collector is usually in a range of 3 $\mu$m to 500 $\mu$m, but is not limited thereto.

As the negative electrode current collector, one having appropriate conductivity without causing unnecessary chemical changes to the secondary battery may also be used, and the type, size, and shape thereof are not particularly limited, which may be selected according to the purposes. As the negative electrode current collector, for example, a film, sheet, foil, net, porous body, foam, or nonwoven fabric made of copper, stainless steel, aluminum, nickel, titanium, or baked carbon, and the like, or a film, sheet, foil, net, porous body, foam, or nonwoven fabric copper or stainless steel, the surface of which is treated with carbon, nickel, titanium, or silver, and the like, or a film, sheet, foil, net, porous body, foam, or non-woven fabric, and the like made of an aluminum-cadmium alloy, and the like may be used. Like the positive electrode current collector, the treatment capable of strengthening bonding force with the negative electrode active material, and the like, such as irregularities, may also be performed on the surface of the negative electrode current collector. The current collector may be in the form of a film, sheet, foil, net, porous material, foam, or nonwoven fabric, and the like.

The thickness of the negative electrode current collector is usually in a range of 3 $\mu$m to 500 $\mu$m, but is not limited thereto.

In the present application, the type or shape of the active material layer is not particularly limited.

For example, as the active material layer, a layer comprising an electrode active material may be applied.

The electrode active material included in the active material layer may be a positive electrode active material or a negative electrode active material depending on the type of electrode.

As the positive electrode active material, for example, a layered compound such as lithium cobalt oxide ($LiCoO_2$) or lithium nickel oxide ($LiNiO_2$), or a compound in which the oxide is substituted with one or more transition metals; lithium iron oxide such as $LiFe_3O_4$; lithium iron phosphate such as $LiFePO_4$; lithium manganese oxide such as formula $Li_{1+c1}Mn_{2-c1}O_4$ ($0 \leq c1 \leq 0.33$), $LiMnO_3$, $LiMn_2O_3$ or $LiMnO_2$; lithium copper oxide ($Li_2CuO_2$); vanadium oxide such as $LiV_3O_8$, $V_2O_5$ or $Cu_2V_2O_7$; Ni-site type lithium nickel oxide represented by formula $LiNi_{1-c2}M_{c2}O_2$ (where M is at least one selected from the group consisting of Co, Mn, Al, Cu, Fe, Mg, B, and Ga, and it satisfies $0.01 \leq c2 \leq 0.3$); lithium manganese composite oxide represented by formula $LiMn_{2-c3}M_{c3}O_2$ (where M is at least one selected from the group consisting of Co, Ni, Fe, Cr, Zn, and Ta, and it satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which Li in the formula is partially substituted with alkaline earth metal ions, and the like may be used, without being limited thereto.

As the negative electrode active material, any compound capable of reversible intercalation and deintercalation of lithium may be used without limitation. An example of the negative electrode active material includes a carbonaceous material such as artificial graphite, natural graphite, graphitized carbon fiber, or amorphous carbon; a metal compound capable of being alloyed with lithium, such as Si, Al, Sn, Pb, Zn, Bi, In, Mg, Ga, Cd, Si alloy, Sn alloy, or Al alloy; metal oxide capable of doping and de-doping lithium, such as $SiO_\beta$ ($0 < \beta < 2$), $SnO_2$, vanadium oxide or lithium vanadium oxide; or a composite comprising a metal and a carbon material, such as a Si-C composite or a Sn-C composite, and any one or a mixture of two or more of the foregoing may be used. A metal lithium thin membrane may also be used as the negative electrode active material, and low crystalline carbon, and high crystalline carbon, and the like all may be used as the carbon material. As the low crystalline carbon, soft carbon and hard carbon are typically known, and as the high crystalline carbon, amorphous, platy, scaly, spherical or fibrous natural graphite or artificial graphite, Kish graphite, pyrolytic carbon, pitch-based carbon fibers (e.g., mesophase pitch-based carbon fibers), carbon microspheres (e.g., mesocarbon microbeads), mesophase pitches, and high-temperature baked carbon such as petroleum and coal tar pitch-derived cokes, and the like are known. As the negative electrode active material, various materials other than the foregoing may be used.

The ratio of the electrode active material in the active material layer is also adjusted according to the purposes, and typically, the electrode active material may be included in a range of about 80 to 99.5 wt% or 88 to 99 wt% relative to the total weight of the active material layer.

The active material layer may comprise a binder as an additional component. The binder may serve to improve adhesion force between active materials and/or adhesion force between the active material layer and the current collector. As the binder, typically, one or more selected from the group consisting of PVDF (poly(vinylidene fluoride)), PVA (poly(vinyl alcohol)), PI (polyimide), PAI (polyamideimide), SBR (styrene butadiene rubber), PEO (poly(ethylene oxide)), CMC (carboxyl methyl cellulose), CA (cellulose acetate), CAB (cellulose acetate butylate), CAP (cellulose acetate propionate), cyanoethyl pullulan, cyanoethyl polyvinyl alcohol, cyanoethyl cellulose, cyanoethyl sucrose, pullulan, PMMA (poly(methylmethacrylate)), polybutylacrylate, polyacrylonitrile, polyvinylpyrrolidone, polyvinyl acetate, EVA (polyethylene-co-vinyl acetate), and polyarylate may be used, without being limited thereto.

In one example, as the binder, PVDF (poly(vinylidene fluoride)) may be used, but in this case, as the PVDF, one having a weight average molecular weight (Mw) in a range of 400,000 to 1,500,000 g/mol or 600,000 to 1,200,000 g/mol may be used. Here, the weight average molecular weight can be measured using GPC (Gel Permeation Chromatograph). In addition, as the PVDF, one having a melting point in a range of 150°C to 180°C or 165°C to 175°C as measured by a DSC (Differential Scanning Calorimetry) device in consideration of solubility and the like may be used.

The ratio of the binder in the active material layer may also be adjusted according to the purposes or uses, and typically, the binder may be included in a ratio of 0.1 to 10 parts by weight or 0.5 to 5 parts by weight relative to 100 parts by weight of the electrode active material.

The active material layer may also comprise a conductive material as an additional component. As the conductive material, one having appropriate conductivity without causing unnecessary chemical changes may be used. For example, as the conductive material, one or two or more of: graphite such as natural graphite and artificial graphite; carbon black such as carbon black, acetylene black, ketjen black, channel black, furnace black, lamp black, or thermal black; conductive fibers such as carbon fibers and metal fibers; conductive tubes such as carbon nanotubes (CNT); fluorocarbon, metal powders such as aluminum or nickel powders; conductive whiskers such as zinc oxide or potassium titanate; conductive metal oxide such as titanium oxide; or conductive materials such as polyphenylene derivatives may be used, without being limited thereto.

The ratio of the conductive material in the active material layer may also be adjusted according to the purposes or uses, and typically, the conductive material may be included in a ratio of 0.1 to 20 parts by weight or 0.3 to 10 parts by weight relative to 100 parts by weight of the electrode active material.

Such an active material layer may have typically a thickness in a range of 50 to 100$\mu$m or 70 to 80$\mu$m, but is not limited thereto.

The electrode of the present application may further comprise an insulating layer formed on the current collector on which the active material layer is formed. Although not particularly limited, the insulating layer may be present on, for example, an uncoated portion on the current collector and/or a boundary between the uncoated portion and the coated portion on the current collector. For example, the insulating layer may be positioned to cover at least a part of the surface of the active material layer on the current collector and at least a part of the surface of the uncoated portion, where the active material layer is not located, on the current collector.

That is, the insulating layer may be formed on the surface of the current collector on which the active material layer is formed, and in one example, the active material layer may be formed on a part of the surface of the current collector, and the insulating layer may be formed on the surface of the current collector at a portion where the active material layer is not formed as the surface of the current collector on which the active material layer is formed, and at least a part of the surface of the active material layer.

Here, the uncoated portion is a region on the current collector, which is a region on the current collector on which the active material layer is not formed, and the coated portion means a region that the active material layer is formed on the current collector.

Such an insulating layer can minimize a short circuit capable of occurring between the positive electrode and the negative electrode in the secondary battery, and the like, and secure stability.

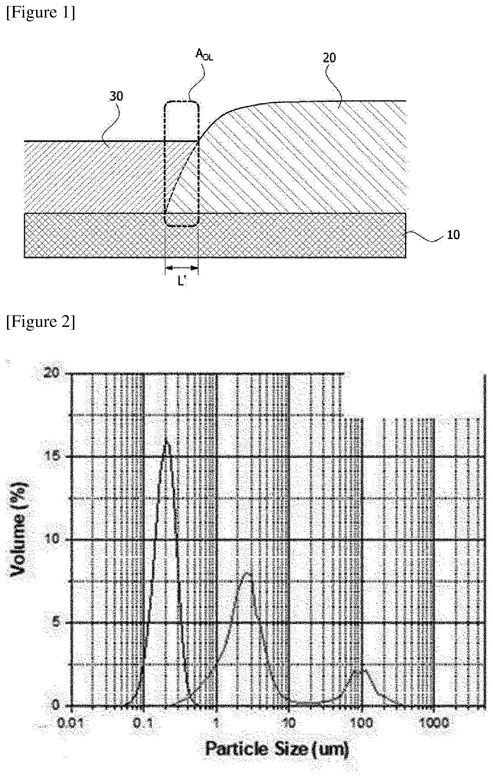

Figure 1 is a cross-sectional diagram of an electrode of the present application comprising such an insulating layer (30), and is a diagram showing a case where a current collector (10), an active material layer (20), and the insulating layer (30) are formed. In the diagram, the insulating layer (30) and the active material layer (20) overlap to form an overlapping region ($A_{OL}$) having a width L'.

Such an insulating layer may have controlled surface characteristics. In this case, the surface characteristics of the insulating layer correspond to the surface opposite to the surface of the insulating layer facing the current collector.

For example, the insulating layer may have an arithmetic mean height (Sa) within a predetermined range. The arithmetic mean height is a variable for surface roughness. Such arithmetic mean height (Sa) is known as the average of absolute values of height differences between the respective points with respect to the average plane of the target surface. In the present application, the lower limit of the arithmetic mean height may be 2.5 $\mu$m, 2.6 $\mu$m, 2.7 $\mu$m, 2.8 $\mu$m, 2.9 $\mu$m, 3 $\mu$m, 3.01 $\mu$m, 3.02 $\mu$m, 3.03 $\mu$m, 3.04 $\mu$m, 3.05 $\mu$m, 3.06 $\mu$m, 3.07 $\mu$m, 3.08 $\mu$m, 3.09 $\mu$m, 3.1 $\mu$m, 3.15 $\mu$m, or 3.5 $\mu$m or so, and the upper limit may be 5 $\mu$m, 4.5 $\mu$m, 4 $\mu$m, 3.5 $\mu$m, 3.475 $\mu$m, 3.45 $\mu$m, 3.425 $\mu$m, 3.4 $\mu$m, 3.375 $\mu$m, 3.35 $\mu$m. $\mu$m, 3.325 $\mu$m, 3.3 $\mu$m, or 3.275 $\mu$m or so. The arithmetic mean height (Sa) may be at least or more than any one of the above-listed lower limits, or may also be within the range of at most or less than any one of the above-listed upper limits while being at least or more than any one of the above-listed lower limits.

Through such surface characteristics, desired insulation properties and adhesiveness can be secured, and defects, such as cracks, capable of occurring in the electrode can be prevented. Such surface characteristics are derived through application of the characteristic materials of the present application to be described below, where through these materials, desired insulation properties and adhesiveness can be secured, and defects, such as cracks, capable of occurring in the electrode can be prevented.

The insulating layer may also satisfy any one or more conditions selected from the group consisting of a maximum height roughness (Sz) within a predetermined range (condition (i)), an arithmetic mean peak curvature (Spc) within a predetermined range (condition (ii)), and a developed interfacial area ratio (Sdr) within a predetermined range (condition (iii)).

The Sz related to the above condition (i) is a maximum height roughness of the surface to be measured, which means the distance between the highest point and the lowest point within a single plane.

The lower limit of the Sz in the insulating layer surface of the present application may be 13 $\mu$m, 14 $\mu$m, 15 $\mu$m, 15.25 $\mu$m, 15.5 $\mu$m, 15.75 $\mu$m, 16 $\mu$m, 16.25 $\mu$m, 16.5 $\mu$m, 16.75 $\mu$m, or 17 $\mu$m or so, and the upper limit may be 40 $\mu$m, 35 $\mu$m, 30 $\mu$m, 25 $\mu$m, 24.5 $\mu$m, 24 $\mu$m, 23.5 $\mu$m, 23 $\mu$m, 22.5 $\mu$m, 22 $\mu$m, 21.5 $\mu$m, 21 $\mu$m, 20.5 $\mu$m, or 20 $\mu$m or so. The Sz may be at least or more than any one of the above-listed lower limits, may be at most or less than any one of the above-listed upper limits, or may also be within the range of at most or less than any one of the above-listed upper limits while being at least or more than any one of the above-listed lower limits.

The Spc is an arithmetic mean of principle curvatures of peaks on the surface. The upper limit of the Spc in the insulating layer of the present application may be 40 mm$^{-1}$, 39 mm$^{-1}$, 38 mm$^{-1}$, 37 mm$^{-1}$, 36 mm$^{-1}$, 35 mm$^{-1}$, 34 mm$^{-1}$, 33 mm$^{-1}$, 32 mm$^{-1}$, 31 mm$^{-1}$, 30 mm$^{-1}$, 29 mm$^{-1}$, 28 mm$^{-1}$, 27 mm$^{-1}$, 26 mm$^{-1}$, 25 mm$^{-1}$, 24 mm$^{-1}$, 23 mm$^{-1}$, 22 mm$^{-1}$, 21 mm$^{-1}$, 20 mm$^{-1}$, 19 mm$^{-1}$, 18 mm$^{-1}$, 17 mm$^{-1}$, 16 mm$^{-1}$, 15 mm$^{-1}$, 14 mm$^{-1}$, 13 mm$^{-1}$, 12 mm$^{-1}$, 11 mm$^{-1}$, 10 mm$^{-1}$, 9 mm$^{-1}$, 8 mm$^{-1}$, or 7 mm$^{-1}$ or so, and the lower limit may be 1 mm$^{-1}$, 2 mm$^{-1}$, 3 mm$^{-1}$, 4 mm$^{-1}$, 5 mm$^{-1}$, 6 mm$^{-1}$, 7 mm$^{-1}$, 8 mm$^{-1}$, 9 mm$^{-1}$, 10 mm$^{-1}$, 15 mm$^{-1}$, 20 mm$^{-1}$, 25 mm$^{-1}$, 30 mm$^{-1}$, or 35 mm$^{-1}$ or so. The Spc may be at least or more than any one of the above-listed lower limits, may be at most or less than any one of the above-listed upper limits, or may also be within the range of at most or less than any one of the above-listed upper limits while being at least or more than any one of the above-listed lower limits.

The Sdr (Developed Interfacial Area Ratio) is a developed area ratio of an interface, and is a numerical value indicating how much the developed area (surface area of the measured shape) increases compared to the area when the measurement area is viewed vertically from above. In the insulating layer of the present application, the upper limit of Sdr may be 0.01, 0.009, 0.0085, 0.008, 0.0075, 0.007, 0.0065, 0.006, 0.0055, 0.005, 0.004, 0.003, 0.002, 0.001, or 0.00095 or so, and the lower limit may be 0.0001, 0.0002, 0.0003, 0.0004, 0.0005, 0.0006, 0.0007, 0.0008, 0.0009, 0.001, 0.002, 0.003, 0.004, or 0.005 or so. The Sdr may be at least or more than any one of the above-listed lower limits, may be at most or less than any one of the above-listed upper limits, or may also be within the range of at most or less than any one of the above-listed upper limits while being at least or more than any one of the above-listed lower limits.

When the insulating layer has surface characteristics satisfying any one, or two or all among the above conditions (i) to (iii), the desired insulation properties and adhesiveness can be secured, and defects, such as cracks, capable of occurring in the electrode can also be prevented. Such surface characteristics are derived through application of the characteristic materials of the present application to be described below, where through these materials, the desired insulation properties and adhesiveness can be secured, and defects, such as cracks, capable of occurring in the electrode can also be prevented.

The method of measuring the Sa, Sz, Spc, and Sdr is not particularly limited, which may be measured, for example, by scanning the surface of the insulating layer using a known 3D scanner equipment, and then analyzing the scan results.

The insulating layer having the above characteristic surface characteristics of the present application may be formed using a specific insulating layer material provided in the present application.

The insulating layer may comprise a water-based binder. In the present application, the term water-based binder may mean a binder having a solubility parameter within a predetermined range. The solubility parameter is a numerical value known as a so-called Hansen solubility parameter, which is a value identified through the literature (e.g., Yanlong Luo et al., 2017, J. Phys. Chem. C 2017, 121, 10163-10173, DOI: 10.1021/acs.jpcc.7b01583), or identified by the method described in the above literature.

In the present application, the lower limit of the solubility parameter of the water-based binder may be 10 MPa$^{1/2}$, 11 MPa$^{1/2}$, 12 MPa$^{1/2}$, 13 MPa$^{1/2}$, 14 MPa$^{1/2}$, 15 MPa$^{1/2}$, or 16 MPa$^{1/2}$ or so, and the upper limit may be 30 MPa$^{1/2}$, 28 MPa$^{1/2}$, 26 MPa$^{1/2}$, 24 MPa$^{1/2}$, 22 MPa$^{1/2}$, 20 MPa$^{1/2}$, or 18 MPa$^{1/2}$ or so. The solubility parameter of the binder may be at least or more than any one of the above-listed lower limits, may be at most or less than any one of the above-listed upper limits, or may also be within the range of at most or less than any one of the above-listed upper limits while being at least or more than any one of the above-listed lower limits.

When a solution obtained by dispersing such a water-based binder in a specific solvent in a specific manner is applied, the particle size distribution of the water-based binder in the solution can be controlled, and as a result, the desired insulating layer can be obtained.

The specific type of the water-based binder is not particularly limited if it has the above-described solubility parameter, and a representative example of the binder having the solubility parameter is SBR (Styrene Butadiene Rubber), but is not limited thereto.

The lower limit of the content of the water-based binder in the insulating layer may be 50 wt%, 55 wt%, 60 wt%, 65 wt%, 70 wt%, 75 wt%, 80 wt%, 85 wt%, 90 wt%, 95 wt%, 99 wt%, or 100 wt% or so relative to the total weight of the insulating layer, and the upper limit may be 100 wt%, 95 wt%, 92.5 wt%, 90 wt%, 87.5 wt%, 85 wt%, 82.5 wt%, or 80 wt% or so relative to the total weight of the insulating layer. The content of the binder may be at least or more than any one of the above-listed lower limits, may be at most or less than any one of the above-listed upper limits, or may also be within the range of at most or less than any one of the above-listed upper limits while being at least or more than any one of the above-listed lower limits.

The insulating layer may comprise particles, for example, inorganic particles having insulating properties, together with the water-based binder. As such particles, for example, ceramic particles may be used. Through this, the safety of the battery and the strength of the insulating layer may be improved.

As the particles, for example, ceramic particles such as metal oxides, metalloid oxides, metal fluorides, or metal hydroxides may be used, and for example, any one, or a combination of two or more selected from boehmite, $\gamma$-AlO(OH), Al(OH)$_3$, AlO(OH), Al$_2$O$_3$, SiO$_2$, TiO$_2$, SnO$_2$, CeO$_2$, MgO, NiO, CaO, ZnO, ZrO$_2$, Y$_2$O$_3$, SrTiO$_3$, BaTiO$_3$, and Mg(OH)$_2$, and the like may be used.

In order to contribute to the surface characteristics of the desired insulating layer, particles having a predetermined average particle diameter may be used as the particles.

For example, the lower limit of the average particle diameter of the particles may be 0.01 $\mu$m, 0.1 $\mu$m, 0.5 $\mu$m, 1 $\mu$m, 2 $\mu$m, 3 $\mu$m, 4 $\mu$m, or 5 $\mu$m or so, and the upper limit may be 100 $\mu$m, 90 $\mu$m, 80 $\mu$m, 70 $\mu$m, 60 $\mu$m, 50 $\mu$m, 40 $\mu$m, 30 $\mu$m, 20 $\mu$m, 10 $\mu$m, 9 $\mu$m, 8 $\mu$m, 7 $\mu$m, 6 $\mu$m, 5 $\mu$m, 4 $\mu$m, 3 $\mu$m, 2 $\mu$m ,or 1.5 $\mu$m or so. The average particle diameter may be at least or more than any one of the above-listed lower limits, may be at most or less than any one of the above-listed upper limits, or may also be within the range of at most or less than any one of the above-listed upper limits while being at least or more than any one of the above-listed lower limits.

Here, the average particle diameter is a so-called D50 particle diameter (median particle diameter), which may mean a particle diameter at 50% cumulative volume basis of the particle size distribution. When the particle size distribution is obtained based on the volume, the particle diameter at the point where the cumulative value is 50% in the cumulative curve with the total volume as 100% can be seen as the average particle diameter. The D50 particle diameter can be measured by a laser diffraction method.

The lower limit of the ratio of the particles in the insulating layer may be 1 part by weight, 5 parts by weight, 10 parts by weight, 15 parts by weight, 20 parts by weight, or 25 parts by weight or so relative to 100 parts by weight of the water-based binder, and the upper limit may be 100 parts by weight, 80 parts by weight, 60 parts by weight, 40 parts by weight, 35 parts by weight, or 30 parts by weight or so relative to 100 parts by weight of the water-based binder. The ratio may be at least or more than any one of the above-listed lower limits, may be at most or less than any one of the above-listed upper limits, or may also be within the range of at most or less than any one of the above-listed upper limits while being at least or more than any one of the above-listed lower limits.

The insulating layer may also comprise a solvent component as a compound. Such a solvent component has been contained in the solution for forming the insulating layer. Such a solvent is usually removed during the drying process for forming the insulating layer, but trace amounts of residual components may also be present in the insulating layer.

The solvent may be, for example, a solvent having a dipole moment within a predetermined range. Through the application of such a solvent, the dispersion state of the water-based binder in the solution can be adjusted according to the purposes. For example, the lower limit of the dipole moment of the solvent at 20°C may be 2.2D, 2.4D, 2.6D, 2.8D, 3.0D, 3.2D, 3.4D, 3.6D, 3.8D, or 4.0D or so, and the upper limit may be 6D, 5.8D, 5.6D, 5.4D, 5.2D, 5.0D, 4.8D, 4.6D, 4.4D, or 4.2Dor so. The dipole moment may be at least or more than any one of the above-listed lower limits, may be at most or less than any one of the above-listed upper limits, or may also be within the range of at most or less than any one of the above-listed upper limits while being at least or more than any one of the above-listed lower limits.

As the solvent, various types may be used without limitation if they have the dipole moment, and for example, a non-aqueous organic solvent may be used. Representatively, an amide-based solvent such as N-methyl-2-pyrrolidone (NMP) may be used, but is not limited thereto.

The content of the solvent in the insulating layer is in a small amount. That is, as described above, the process of removing the solvent is performed in the process of forming the insulating layer, so that the solvent may not exist in the insulating layer. If present, the lower limit of the content of the solvent in the insulating layer may be 0 parts by weight or so relative to 100 parts by weight of the binder, and the upper limit may be 20 parts by weight, 15 parts by weight, 10 parts by weight, 9 parts by weight, 8 parts by weight, 7 parts by weight, 6 parts by weight, 5 parts by weight, 4 parts by weight, 3 parts by weight, 2 parts by weight, 1 part by weight, or 0.5 parts by weight or so. The content may be at least or more than any one of the above-listed lower limits, may be at most or less than any one of the above-listed upper limits, or may also be within the range of at most or less than any one of the above-listed upper limits while being at least or more than any one of the above-listed lower limits.

Such an insulating layer may be formed to have an appropriate thickness.

For example, the lower limit of the thickness of the insulating layer may be 3.5 $\mu$m, 4 $\mu$m, 4.5 $\mu$m, 5 $\mu$m, 5.5 $\mu$m, 6 $\mu$m, 6.5 $\mu$m, or 7 $\mu$m or so, and the upper limit may be 50 $\mu$m, 45 $\mu$m, 40 $\mu$m, 35 $\mu$m, 30 $\mu$m, 25 $\mu$m, 20 $\mu$m, or 15 $\mu$m or so. The thickness may be at least or more than any one of the above-listed lower limits, may be at most or less than any one of the above-listed upper limits, or may also be within the range of at most or less than any one of the above-listed upper limits while being at least or more than any one of the above-listed lower limits. When the thickness of the insulating layer satisfies the above range, the movement of lithium ions may be limited, thereby improving capacity exhibition problems, and securing appropriate charge and discharge capacity.

Such an insulating layer may be manufactured using an insulating layer solution as a material. In this case, the insulating layer solution may comprise the above-described water-based binder dispersed in the above-described solvent having the dipole moment.

In the insulating layer solution, the water-based binder may be dispersed to exhibit a substantially monodisperse particle size distribution. At this time, the fact to exhibit a substantially monodisperse particle size distribution means a case where one substantially main peak is identified in the particle size distribution curve relative to the volume. Such a dispersed state of the water-based binder cannot be achieved by dispersing the water-based binder in the solvent in a conventional manner, and it is necessary to prepare the solution in a manner to be described below.

The lower limit of the content (solid content = $100 \times$ weight of water-based binder/(weight of water-based binder + weight of solvent)) of the water-based binder in the solution may be 1%, 2%, 3%, 4%, 5%, 6%, 7%, 8%, 9%, or 10% or so, and the upper limit may be 50%, 45%, 40%, 35%, 30%, 25%, 20%, 15%, or 12% or so. The solid content may be at least or more than any one of the above-listed lower limits, may be at most or less than any one of the above-listed upper limits, or may also be within the range of at most or less than any one of the above-listed upper limits while being at least or more than any one of the above-listed lower limits.

The solution may comprise the above-described particles as an additional component. At this time, the solution may exhibit the substantially monodisperse particle size distribution as described above even in a state including the particles. At this time, the specific types and ratios of the applicable particles are as described above.

In a solution comprising the water-based binder and a first solvent in which the water-based binder is dispersed (hereinafter, may be referred to as a first solution), such a solution for the insulating layer (which may also be referred to as the composition for the insulating layer) may be prepared by a method of adding a second solvent different from the first solvent thereto while removing the first solvent therefrom.

That is, the solution for the insulating layer may be prepared by a method of adding another solvent while removing the solvent from the solution in which the water-based binder is dispersed. At this time, as the added second solvent, a solvent capable of remaining in the above-described insulating layer may be used.

When the water-based binder is directly dispersed in the second solvent, the substantially monodisperse particle size distribution as described above is not obtained, and it is difficult to form a desired insulating layer using such a material.

As the first solvent, a solvent having a lower dipole moment than that of the second solvent may be used. For example, the upper limit of the dipole moment of the first solvent at 20°C may be 2.5D, 2.4D, 2.3D, 2.2D, 2.1D, 2.0D, 1.9D, or 1.85D or so, and the lower limit may be 0D, 0.5D, 1D, or 1.5D or so. While the dipole moment is lower than the dipole moment of the second solvent, it may be at least or more than any one of the above-listed lower limits, may be at most or less than any one of the above-listed upper limits, or may also be within the range of at most or less than any one of the above-listed upper limits while being at least or more than any one of the above-listed lower limits.

The first solvent may be used without limitation if it has the dipole moment as above, but, for example, a water-based solvent such as water may be used.

The lower limit of the content (solid content = 100 × weight of water-based binder/(weight of water-based binder + weight of first solvent)) of the water-based binder in the first solution comprising such a first solvent and the water-based binder may be 1%, 5%, 10%, 15%, 20%, 25%, 30%, 35%, or 40% or so, and the upper limit may be 100%, 95%, 90%, 85%, 80%, 75%, 70%, 65%, 60%, 55%, 50%, or 45% or so. The solid content may be at least or more than any one of the above-listed lower limits, may be at most or less than any one of the above-listed upper limits, or may also be within the range of at most or less than any one of the above-listed upper limits while being at least or more than any one of the above-listed lower limits.

The removal of the first solvent from such a solution may be performed while maintaining the first solution at a predetermined temperature to volatilize the first solution. Since there is a section where the removal of the first solvent and the addition of the second solvent are simultaneously performed, a solvent having a higher boiling point than that of the first solvent may be used as the second solvent. In this case, the temperature for removing the first solvent may be between the boiling point of the first solvent and the boiling point of the second solvent.

For example, the lower limit of the boiling point of the first solvent may be 50°C, 55°C, 60°C, 65°C, 70°C, 75°C, 80°C, 85°C, 90°C, or 95°C or so, and the upper limit may be 150°C, 145°C, 140°C, 135°C, 130°C, 125°C, 120°C, 115°C, 110°C, or 105°C or so. The boiling point may be at least or more than any one of the above-listed lower limits, may be at most or less than any one of the above-listed upper limits, or may also be within the range of at most or less than any one of the above-listed upper limits while being at least or more than any one of the above-listed lower limits.

The second solvent may have a higher boiling point than the first solvent. For example, the lower limit of the difference (BP2-BP1) between the boiling point of the second solvent (BP2) and the boiling point of the first solvent (BP1) may be 50°C, 55°C, 60°C, 65°C, 70°C, 75°C, 80°C, 85°C, 90°C, or 95°C or so, and the upper limit may be 150°C, 145°C, 140°C, 135°C, 130°C, 125°C, 120°C, 115°C, 110°C, or 105°C or so. The difference in boiling point may be at least or more than any one of the above-listed lower limits, or may also be within the range of at most or less than any one of the above-listed upper limits while being at least or more than any one of the above-listed lower limits.

In the step of preparing the insulating layer solution, the removal of the first solvent may proceed at a constant rate. That is, the lower limit of the removal rate of the first solvent may be 0.5 g/min, 1 g/min, 1.5 g/min, 2 g/min, 2.5 g/min, 5 g/min, 10 g/min, 50 g/min, 100 g/min, 500 g/min, 1 kg/min, 50 kg/min, 100 kg/min, 150 kg/min, 200 kg/min, 250 kg/min, 300 kg/min, 350 kg/min, 400 kg/min, 450 kg/min, 500 kg/min, 550 kg/min, or 600 kg/min or so, and the upper limit may be 700 kg/min, 650 kg/min, 600 kg/min, 550 kg/min, 500 kg/min, 450 kg/min, 400 kg/min, 350 kg/min, 300 kg/min, 250 kg/min, 200 kg/min, 150 kg/min, 100 kg/min, 50 kg/min, 10 kg/min, 1 kg/min, 500 g/min, 100 g/min, 50 g/min, 10 g/min, 5 g/min, 4 g/min, or 3 g/min or so. The removal rate of the first solvent may be at least or more than any one of the above-listed lower limits, may be at most or less than any one of the above-listed upper limits, or may also be within the range of at most or less than any one of the above-listed upper limits while being at least or more than any one of the above-listed lower limits. Such a removal rate may be controlled through adjustment of the drying temperature of the first solution. The above-described removal rate is an average rate.

In the step of preparing the insulating layer solution, the addition of the second solvent may also proceed at a constant rate. That is, the lower limit of the addition rate of the second solvent may be 0.01 kg/min, 0.05 kg/min, 0.1 kg/min, 0.15 kg/min, or 0.2 kg/min or so, and the upper limit may be 250 kg/min, 200 kg/min, 150 kg/min, 50 kg/min, 10 kg/min, 9 kg/min, 8 kg/min, 7 kg/min, 6 kg/min, 5 kg/min, 4 kg/min, or 3 kg/min or so. The addition rate is an average rate.

In the manufacturing process, after the first solvent is substantially removed from the first solution, the removal of the first solvent and the addition of the second solvent may be performed until the solid content of the solution comprising the second solvent and the water-based binder reaches a predetermined range.

That is, the above process is performed until the solid content (= 100 × weight of water-based binder/(weight of water-based binder + weight of second solvent)) corresponding to the content of the water-based binder in the solution reaches a predetermined range. At this time, the lower limit of the solid content may be 1%, 2%, 3%, 4%, 5%, 6%, 7%, 8%, 9%, or 10% or so, and the upper limit may be 50%, 45%, 40%, 35%, 30%, 25%, 20%, 15%, or 12% or so. The solid content may be at least or more than any one of the above-listed lower limits, may be at most or less than any one of the above-listed upper limits, or may also be within the range of at most or less than any one of the above-listed upper limits while being at least or more than any one of the above-listed lower limits.

In such a manner, an insulating layer solution in a desired dispersed state may be prepared.

As described above, the removal of the first solvent and the addition of the second solvent may be performed at a temperature that the removal rate of the first solvent may be achieved from temperatures between the boiling point of the first solvent and the boiling point of the second solvent.

Meanwhile, in the above process, at least a part of the process of removing the first solvent and the process of removing the second solvent overlaps. That is, the removal of the first solvent and the addition of the second solvent may be started at the same time, and in some cases, one of the processes may be performed while another process is in progress, where in any case, a certain portion overlaps.

In the process of preparing the insulating layer solution, a step of adding the above-described particles to the solution comprising the second solvent may also be performed after replacing the first solvent in the first solution with the second solvent as above.

Such an insulating layer solution allows an insulating layer having desired characteristics to be formed. For example, the insulating layer solution does not cause a problem of swelling at a high temperature while forming an insulating layer that insulating performance and wet peel force are secured during the formation process of the insulating layer. When the insulating layer solution is used, gelation of the active material layer can be suppressed, and cracks, and the like at the interface between the insulating layer and the active material layer can be prevented.

For example, the insulating layer solution may form an insulating layer in which the percentage (R1) of the difference between the arithmetic average heights (Sa) of the surface according to Equation 1 below is within a predetermined range. The upper limit of the percentage (R1) may be 20%, 19%, 18%, 17%, 16%, 15%, 14%, 13%, 12%, 11%, 10%, 9%, 8%, 7%, 6%, or 5% or so, and the lower limit may be 0.01%, 0.05%, 0.1%, 0.5%, or 1% or so. The percentage (R1) may be at least or more than any one of the above-listed lower limits, may be at most or less than any one of the above-listed upper limits, or may also be within the range of at most or less than any one of the above-listed upper limits while being at least or more than any one of the above-listed lower limits.

[Equation 1]

$$R1 = |Sa1\text{-}Sa2|/Sa2 \times 100$$

In Equation 1, Sa1 is the arithmetic mean height (Sa) of the surface of the insulating layer formed by drying the insulating layer solution at 130°C, and Sa2 means the arithmetic mean height (Sa) of the surface of the insulating layer formed by drying the insulating layer solution at room temperature (about 25°C).

The insulating layer solution may also form an insulating layer having a ratio (R2) of the adhesion force difference according to Equation 2 below within a predetermined range. The lower limit of the ratio (R2) of the difference in adhesion force according to Equation 2 above may be 70%, 72%, 74%, 76%, 78%, 80%, 82%, 84%, 86%, or 88% or so, and the upper limit may be 100%, 99%, 98%, 97%, 96%, or 95% or so. The ratio may be at least or more than any one of the above-listed lower limits, may be at most or less than any one of the above-listed upper limits, or may also be within the range of at most or less than any one of the above-listed upper limits while being at least or more than any one of the above-listed lower limits.

[Equation 2]

$$R2 = Aw/Ad \times 100$$

In Equation 2, Aw means the peel force (wet peel force) of the insulating layer with respect to a metal specimen measured through a 90-degree peel test in a state where the insulating layer attached to the metal specimen is immersed in an electrolyte at room temperature (about 25°C), and Ad means the peel force (dry peel force) of the insulating layer with respect to the metal specimen measured through a 90-degree peel test at room temperature (about 25°C).

Here, the wet peel force may mean the peel force of the insulating layer measured in a state of being impregnated with an electrolyte solution. The wet peel force may mean the peel force measured through a 90-degree peel test after immersing a metal specimen, in which an insulating layer is formed on one side, in an electrolyte. The metal specimen is a space in which an insulating layer is formed, which may mean a current collector used in manufacturing an electrode, and may be a current collector punched out to have predetermined width and length.

As the ratio (R2) of the adhesive force difference according to Equation 2 above satisfies the above range, the insulating layer according to one example of the present application may block the movement of lithium ions in the overlay region of the electrode to suppress the capacity exhibition.

The overlay region may mean a region where an insulating layer is formed in an electrode. The insulating layer may be positioned to cover at least a part of the surface of the active material layer and at least a part of the surface of the uncoated portion, where the active material layer is not located, on the current collector, but the region where the insulating layer is formed in the active material layer may be referred to as the overlay region.

In the insulating layer according to one example of the present application, the wet peel force (Aw) of the insulating layer peeled off from the metal specimen as measured through a 90-degree peel test in a state where the insulating layer attached to the metal specimen is immersed in an electrolyte at room temperature may be 15 gf/ 20 mm or more, 15.5 gf/ 20 mm or more, 16 gf/ 20 mm or more, 16.5 gf/ 20 mm or more, 17 gf/ 20 mm or more, 17.5 gf/ 20 mm or more, 18 gf/ 20 mm or more, 18.5 gf/20mm or more, or 19 gf/20mm or more. In another example, the wet peel force of the insulating layer may be 50 gf / 20mm or less, 48 gf / 20mm or less, 46 gf / 20mm or less, 44 gf / 20mm or less, 42 gf / 20mm or less, 40 gf / 20mm or less, 38 gf/20 mm or less, 36 gf/20 mm or less, 34 gf/20 mm or less, 32 gf/20 mm or less, or 30 gf/20 mm or less. The wet peel force of the insulating layer may be within a range formed by appropriately selecting the above-described upper and lower limits.

In the measurement of the wet peel force (Aw) of the insulating layer, it may be measured with the force that the insulating layer is peeled from the metal specimen by applying tensile force to one side (e.g., self-standing region) of the insulating layer in a state where the metal specimen on which the insulating layer is formed is fixed. At this time, the metal specimen on which the insulating layer is formed may be in a state where it is impregnated in the electrolyte at room temperature, and the wet peel force may be measured with the force peeled off from the metal specimen in the state impregnated in the electrolyte. The wet peel force of the insulating layer may be measured by a 90-degree peel test. For example, after setting a load of a UTM device (supplier company: TA) to 0, the peel force of the metal specimen may be measured by setting the load speed in a range of 10 to 200 mm/min.

The electrolyte used when measuring the wet peel force (Aw) of the insulating layer may comprise an organic solvent and an electrolyte salt, and the electrolyte salt may be a lithium salt. As the lithium salt, those commonly used in non-aqueous electrolytes for lithium secondary batteries may be used without limitation. For example, as the lithium salt, $LiPF_6$, $LiClO_4$, $LiAsF_6$, $LiBF_4$, $LiSbF_6$, $LiAl0_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O4)_2$, and the like may be used. As the organic solvent included in the electrolyte, those commonly used in electrolytes for lithium secondary batteries may be used without limitation. For example, ethers, esters, amides, linear carbonates, or cyclic carbonates may be used alone or in a mixture of two or more. Among them, a representative example may include a carbonate compound that is a cyclic carbonate, a linear carbonate, or a mixture thereof.

The dry peel force (Ad) of the insulating layer may also be measured by the 90-degree peel test at room temperature.

Generally, the electrode in the secondary battery exists in a state of being impregnated with the electrolyte, but conventional insulating coatings did not prevent the movement of lithium ions in the overlay region of the electrode because the wet peel force in the state of being impregnated with the electrolyte was lowered, thereby causing the capacity exhibition problem. Particularly, lithium ions may be precipitated upon capacity exhibition in the overlay region of the electrode, which may cause a decrease in battery stability.

When the wet peel force of the insulating layer satisfies the above range, the movement of lithium ions in the overlay region of the electrode can be suppressed, and the stability of the battery can be improved by preventing the lithium ions to be precipitated.

In the electrode of the present application, the insulating layer may exhibit an excellent peel force with respect to the current collector. The peel force may be a wet peel force. Such a wet peel force may be a peel force measured by impregnating the electrode comprising the current collector and the insulating layer with the electrolyte, which may be a peel force of the insulating layer with respect to the current collector. The wet peel force may be a peel force of the insulating layer with respect to the current collector measured at a peel angle of 90 degrees and a peel rate of 100 mm/min, where the peel force may be a peel force measured after the electrode comprising the insulating layer and the current collector is immersed in the electrolyte at a temperature of 25°C for 1 hour. The lower limit of the peel force (Aw) may be 15 gf/20mm, 15.5 gf/ 20mm, 16 gf/ 20mm, 16.5 gf/ 20mm, 17 gf/ 20mm, 17.5 gf/ 20mm, 18 gf/ 20mm, 18.5 gf/ 20mm, or 19 gf/20mm, and the upper limit may be 50 gf/20mm, 48 gf/20mm, 46 gf/20mm, 44 gf/20mm, 42 gf/20mm, 40 gf/20mm, 38 gf/20mm, 36 gf/20mm, 34 gf/20mm, 32 gf/20mm, or 30 gf/20mm. The peel force may be at least or more than any one of the above-listed lower limits, may be at most or less than any one of the above-listed upper limits, or may also be within the range of at most or less than any one of the above-listed upper limits while being at least or more than any one of the above-listed lower limits. The type of electrolyte applied in the above process is the same as that applied when measuring Aw in Equation 2 above. The method for measuring such a peel force specifically follows the contents described in the section of Examples.

The method for manufacturing such an electrode of the present application is not particularly limited if the above-described insulating layer solution is used.

For example, the manufacturing method of the electrode may comprise a step of forming an insulating layer on at least one side of the current collector by using the above-described insulating layer solution. In this process, the insulating layer solution may be a solution prepared in the above-described manner. In addition, the insulating layer may also be formed on the current collector on which the active material layer is formed, and may also be formed on the current collector on which the active material layer is not formed, but it is usually formed on the current collector on which the active material layer is formed.

When the insulating layer is formed on the current collector on which the active material layer is formed, the insulating layer may be formed to cover at least a part of the surface on the active material layer and at least a part of the surface of the uncoated portion that the active material layer is not located on the current collector. The insulating layer may exhibit the above-described surface characteristics.

The manufacturing method of the electrode may further comprise a step of forming the active material layer on at least one side of the current collector.

Here, the method of forming the active material layer is not particularly limited. For example, the active material layer may be formed by applying an active material composition (slurry) for forming an active material layer on the current collector, and performing a drying and/or rolling process if necessary.

Here, the application may be performed by various known methods such as slot die coating, slide coating, and curtain coating.

The active material layer may mean the active material composition (slurry) applied to at least one side of the current collector, and in another example, it may mean a state in which the applied active material composition (slurry) is completely dried. Specifically, when the active material composition is dried simultaneously with the insulating layer solution, the active material layer may mean the applied active material composition, and when the active material composition and the insulating layer solution to be described below have different drying times, the active material layer may mean a state in which the applied active material composition is dried and the drying is completed.

The active material composition (slurry) may be coated on a part or all of one side of the current collector according to the secondary battery model. For example, the active material composition is applied to only a part of one side of the current collector to be coated (coated portion) and is not applied to the other portion (uncoated portion), whereby it is also possible to form a predetermined patter. However, considering that the insulating layer is introduced to prevent a short circuit between the positive electrode and the negative electrode, the active material composition is preferably applied to only a part so that the coated portion and the uncoated portion are formed about one side of the current collector to be coated.

The type of current collector applied in the process is as described above.

The active material composition (slurry) may be prepared by dispersing the above-described electrode active material and other necessary components (e.g., a binder and/or a conductive material, etc.) in an appropriate solvent. At this time, the type and ratio of the electrode active material, the binder for the active material, and the conductive material, and the like applied are as described above. Also, a known solvent may be applied as the solvent, and for example, water, isopropyl alcohol, N-methyl-2-pyrrolidone (NMP), and/or acetone, and the like may be applied.

The insulating layer may be formed on the current collector, on which the active material layer is formed or not formed in such a manner, by using the insulating layer solution. If the active material layer is present, the insulating layer may be formed to cover at least a part of the surface of the active material layer and at least a part of the surface of the uncoated portion on which the active material layer is not located on the current collector. Here, the insulating layer may mean a state in which the applied insulating composition is dried and the drying is completed.

At this time, the application method for forming the insulating layer is not particularly limited, and for example, the same method as the application method for forming the active material layer may be applied.

After application of such an insulating layer solution, the insulating layer may be formed through a drying process, and the like. When the applied active material composition is present in this process, the drying may also be performed simultaneously with respect to the applied active material composition and the insulating layer solution. In some cases, the active material composition may be dried first, and then the insulating composition may be dried.

The drying temperature is not particularly limited. For example, the lower limit of the drying temperature may be 20°C, 25°C, 30°C, 35°C, 40°C, 45°C, 50°C, 55°C, 60°C, 65°C, 70°C, 75°C, 80°C, 85°C, 90°C, 95°C, 100°C, 105°C, 110°C, 115°C, 120°C, 125°C, or 130°C or so, and the upper limit may be 200°C, 190°C, 180°C, 170°C, 160°C, 150°C, 140°C, 135°C, 130°C, 125°C, 120°C, 115°C, 110°C, 105°C, 100°C, 95°C, 90°C, 85°C, 80°C, 75°C, 70°C, 65°C, 60°C, 55°C, 50°C, 45°C, or 40°C or so. The temperature may be at least or more than any one of the above-listed lower limits, may be at most or less than any one of the above-listed upper limits, or may also be within the range of at most or less than any one of the above-listed upper limits while being at least or more than any one of the above-listed lower limits.

The drying time may be appropriately adjusted according to the drying temperature, which is not particularly limited. For example, the lower limit of the drying time may be 5 minutes, 10 minutes, 15 minutes, 20 minutes, 30 minutes, 40 minutes, or 50 minutes or so, and the upper limit may be 200 minutes, 180 minutes, 150 minutes, 100 minutes. 90 minutes, 80 minutes, 70 minutes, 60 minutes, 50 minutes, 40 minutes, 30 minutes, 20 minutes, or 10 minutes or so. The drying time may be at least or more than any one of the above-listed lower limits, may be at most or less than any one of the above-listed upper limits, or may also be within the range of at most or less than any one of the above-listed upper limits while being at least or more than any one of the above-listed lower limits.

In the method for manufacturing an electrode according to one example of the present application, even if the insulating composition is dried at room temperature, it does not have a high increase rate in surface roughness compared to drying at a high temperature. Here, the fact that it does not have a high increase rate in surface roughness may mean that the difference percentage (R1) of the arithmetic mean height (Sa) of the surface according to Equation 1 as described above is 20% or less, 19% or less, 18% or less, 17% or less, 16% or less, 15% or less, 14% or less, 13% or less, 12% or less, 11% or less, 10% or less, 9% or less, 8% or less, 7% or less, 6% or less, or 5% or less.

As described above, in the method for manufacturing an electrode according to one example of the present application, it does not have a high increase rate in surface roughness, so that it can be manufactured even at high temperature and room temperature drying, and when drying at room temperature, the drying is completed in a short time, whereby penetration into the active material layer can be minimized.

The method for manufacturing an electrode of the present application may also comprise any known process (e.g., rolling, etc.) required in addition to the above process.

The electrode according to one example of the present application may be a positive electrode or a negative electrode. Usually, the insulating layer is formed on the positive electrode.

A secondary battery according to one example of the present application may comprise the electrode according to one example of the present application. The secondary battery may be a lithium-ion battery. In addition, the secondary battery may comprise a positive electrode, a negative electrode facing the positive electrode, a separator interposed between the positive electrode and the negative electrode, and an electrolyte. In this case, the secondary battery may optionally further comprise a battery container for accommodating the electrode assembly of the positive electrode, the negative electrode, and the separator, and a sealing member sealing the battery container.

The separator separates the negative electrode and the positive electrode, and provides a migration passage of lithium ions, where any separator commonly used in the art may be used without limitation, and particularly, it is preferable to have low resistance to the ion migration of the electrolyte and simultaneously excellent moisture content capability of the electrolyte. Specifically, porous polymer films, for example, porous polymer films made of polyolefinbased polymers such as ethylene polymers, propylene polymers, ethylene/butene copolymers, ethylene/hexene copolymers, and ethylene/methacrylate copolymers, or their laminated structure with two or more layers may be used. Also, a conventional porous nonwoven fabric, for example, a nonwoven fabric made of high melting point glass fiber, polyethylene terephthalate fiber, or the like may also be used. In addition, a coated separator comprising a ceramic component or a polymer material may also be used to secure heat resistance or mechanical strength, and may be selectively used in a single layer or multilayer structure.

As the electrolyte, an organic liquid electrolyte, an inorganic liquid electrolyte, a geltype polymer electrolyte, a molten-type inorganic electrolyte, and the like, which is commonly used in the art, may be used, without being limited thereto. Specifically, the electrolyte may comprise an organic solvent and a lithium salt.

The organic solvent may be used without limitation if it may serve as a medium through which ions involved in the electrochemical reaction of the battery may move. Specifically, as the organic solvent, an ester-based solvent such as methyl acetate, ethyl acetate, $\gamma$-butyrolactone, or $\varepsilon$-caprolactone; an ether-based solvent such as dibutyl ether or tetrahydrofuran; a ketone solvent such as cyclohexanone; an aromatic hydrocarbon-based solvent such as benzene or fluorobenzene; a carbonate-based solvent such as dimethylcarbonate (DMC), diethylcarbonate (DEC), methylethylcarbonate (MEC), ethylmethylcarbonate (EMC), ethylenecarbonate (EC), or propylene carbonate (PC); an alcohol solvent such as ethyl alcohol or isopropyl alcohol; nitriles such as R-CN (R is a linear, branched or cyclic hydrocarbon group with 2 to 20 carbon atoms, which may contain a doublebonded aromatic ring or an ether bond); amides such as dimethylformamide; dioxolanes such as 1,3-dioxolane; or sulfolanes, and the like may be used. Among them, it is preferably a carbonate-based solvent, and more preferably, a mixture of a cyclic carbonate (e.g., ethylene carbonate or propylene carbonate, etc.) having high ion conductivity and high dielectric constant capable of increasing the charge and discharge performance of batteries, and a lowviscosity linear carbonate-based compound (for example, ethyl methyl carbonate, dimethyl carbonate, or diethyl carbonate, etc.).

The lithium salt may be used without limitation if it is a compound capable of providing lithium ions used in a lithium secondary battery. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$, and the like may be used. The concentration of the lithium salt may be adjusted within a range of 0.1M to 2.0M. When the concentration of the lithium salt is within the above range, the electrolyte has appropriate conductivity and viscosity, so that excellent performance of the electrolyte can be exhibited, and lithium ions can move effectively.

For the purpose of improving battery life characteristics, suppressing battery capacity decrease, improving battery discharge capacity, and the like, in addition to the components of the electrolyte, for example, one or more additives of a aloalkylene carbonate-based compound such as difluoroethylene carbonate, pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxyethanol, or aluminum trichloride, and the like may also be further included in the electrolyte. In this case, the additive may be included in an amount of 0.1 wt% to 5 wt% relative to the total weight of the electrolyte.

The secondary battery may be applied to portable devices such as mobile phones, notebook computers, and digital cameras, and electric vehicles such as hybrid electric vehicles (HEVs).

**Advantageous Effects**

The present application can provide an electrode having an insulating layer that stably secures desired insulation properties, and simultaneously exhibits excellent adhesion force, and does not cause cracks or the like at the boundary between the coated portion and the uncoated portion of the electrode, and a manufacturing method thereof. In the present application, the use of the electrode can also be provided.

**Description of Drawings**

Figure 1 is a cross-sectional diagram of an electrode according to one example of the present application.

Figure 2 is a view showing particle size distributions of SBR in a SBR solutions in NMP.

Figure 3 is a view showing particle size distribution analysis results for an insulating layer solution.

Figure 4 is an SEM image (magnification: ×500) of the surface of the insulating layer of Example 1.

Figure 5 is an SEM image (magnification: ×500) of the surface of the insulating layer of Example 2.

Figure 6 is a SEM image (magnification: ×500) of the surface of Comparative Example 1.

Figure 7 is an SEM image (magnification: ×500) of the surface of the insulating layer of Comparative Example 2.

Figure 8 is an SEM image of the surface of the insulating layer of Comparative Example 3 (magnification: ×500).

Figure 9 is a view for explaining a method of evaluating a peel force.

Figure 10 is a graph measuring discharge capacities in order to evaluate capacity exhibition of coin-type half-cells of Examples and Comparative Examples (room temperature discharge characteristics).

Figure 11 is a graph measuring discharge capacities in order to evaluate capacity exhibition of coin-type half-cells of Examples and Comparative Examples (45°C discharge characteristics).

**Mode for Invention**

Hereinafter, the electrodes and the like are described in detail through examples, and the like, but the scope of the electrodes is not limited by the following examples.

**1. Evaluation of particle size distribution**

An average particle diameter (D50 particle diameter) or particle size distribution was measured with Malvern's MASTERSIZER3000 equipment in accordance with ISO-13320 standard. When particles dispersed in a solvent are irradiated with lasers, the lasers are scattered by the particles, and strength and directionality values of the scattered lasers vary depending on the sizes of the particles, so that the average diameter can be obtained by analyzing them using the Mie theory.

A volume-based cumulative graph of the particle size distribution was obtained through conversion to the diameters of spheres having the same volumes as those of the particles dispersed through the analysis, and the 50% cumulative particle diameter (median diameter) of the graph was designated as the average particle diameter (D50 particle diameter).

**Preparation Example 1. Preparation of composition for insulating layer**

In an SBR aqueous solution in which SBR (Styrene Butadiene Rubber) was dispersed in water (solvent), the solvent was replaced with NMP (N-methyl pyrrolidone) to prepare NMP-substituted SBR. The water is a solvent with a dipole moment of about 1.84D (20°C) or so and a boiling point of about 100°C or so; NMP is a solvent with a dipole moment of about 4.1D (20°C) or so and a boiling point of about 202°C or so; and SBR is a binder with a solubility parameter of about 16.9 MPa$^{1/2}$ or so. The solubility parameter of the SBR is a value identified in Yanlong Luo et al., a literature (J. Phys. Chem. C 2017, 121, 10163-10173).

The SBR aqueous solution contains about 100 g of SBR and about 150 g of water, whereby the solid content of SBR is about 40%.

While the SBR aqueous solution was maintained at a temperature higher than the boiling point of the water and lower than the NMP to evaporate the water in the aqueous solution, the NMP was added dropwise thereto. The temperature was set such that substantially all water in the SBR aqueous solution evaporated over about 60 minutes. That is, the temperature was set such that the water removal rate was about 2.5 g/min. The NMP was finally added dropwise at a constant rate that about 1000 g of NMP could be introduced over 5 minutes. Therefore, the addition rate of NMP is about 0.2 kg/min, and the solid content of SBR (=100×SBR/(SBR+NMP)) in the solution in which water is replaced with NMP through the above process is approximately 10%.

In the same manner as above, water was replaced with NMP in the SBR aqueous solution to obtain a solution (SBR solution in NMP) having a solid content of about 10%.

Figure 2 is a graph analyzing the particle size distribution of SBR in the SBR solution in NMP formed in the above manner. The part showing the monodisperse particle size distribution in Figure 2 is the particle size distribution of the SBR in NMP. Through the drawing, it can be known that it shows a monodisperse type distribution in which the average diameter (D50 particle diameter) of the SBR binder in the particle size distribution of the SBR solution in NMP is about 180 nm. In Figure 2, the bimodal particle size distribution is not for the SBR solution in NMP formed in the above manner, but is a particle size distribution for the case where the SBR obtained by drying the SBR aqueous solution is dispersed again in NMP. In the case of the powder redispersion, the particle size distribution showed the bimodal distribution, and the average particle diameter (D50) was also confirmed to be very large due to the aggregation of SBR.

A composition for an insulating layer was prepared by combining boehmite (average particle diameter (D50): about 1 μm) as ceramic particles to the prepared SBR solution in NMP. At this time, the combination was performed so that the weight ratio of the SBR and boehmite was about 4:1 (SBR: boehmite) or so.

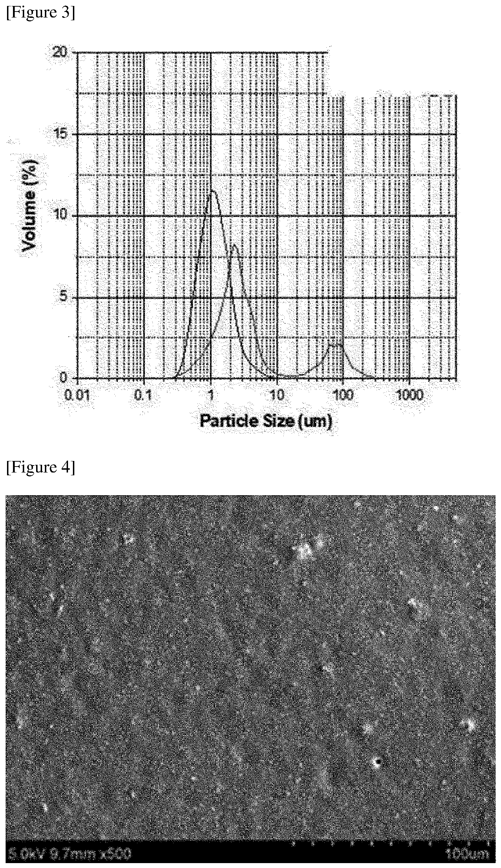

Figure 3 is a particle size analysis result performed on a composition for an insulating layer. In Figure 3, the monodisperse particle size distribution is the case where the boehmite is dispersed in the SBR solution in NMP. It can be known from Figure 3 that the D50 particle diameter in the particle size distribution of the composition for the insulating layer has been confirmed to be about 1.1 μm, and it shows a monodisperse type distribution. The particle size distribution confirmed when the same amount of boehmite is combined to the solution showing the bimodal particle size distribution in Figure 2 is also shown in Figure 3, which is a graph showing the bimodal distribution in Figure 3. In the case of the powder redispersion, the particle size distribution showed a bimodal distribution, and the D50 particle size was also confirmed to be large.

These results show that the particle size distribution of the particulate component in the composition varies depending on the manufacturing method of the composition for the insulating layer.

**Example 1**

**(1) Manufacture of electrode**

A slurry (active material composition) was applied to one side of an aluminum foil (current collector). As the slurry was applied to a part of the aluminum foil, the application was applied so that a coated portion (portion to which the slurry was applied) and an uncoated portion (portion to which the slurry was not applied) were formed on the aluminum foil.

Subsequently, the solution for the insulating layer of Preparation Example 1 was applied to cover both the uncoated portion and the coated portion adjacent to the uncoated portion on the aluminum foil, and then dried in a convection oven at a temperature of 130°C for 10 to 20 minutes or so, and then a positive electrode, in which the active material layer and the insulating layer were formed, was manufactured through a rolling process.

The thickness of the formed active material layer was about 75 μm or so, and the thickness of the insulating layer was about 7 μm or so. As the slurry, one obtained by mixing a positive electrode active material (LiNi$_{0.65}$Co$_{0.15}$Mn$_{0.2}$O$_2$), a binder (PVDF, poly(vinylidene fluoride)), and carbon black (C) in a weight ratio of 97.5:1.66:0.7 (positive electrode active material: PVDdF: C) to NMP (N-methyl-2-pyrrolidone) was used.

**(2) Manufacture of coin-type half-cell**

An electrode assembly was manufactured by laminating a lithium metal plate, a separator, and the positive electrode, and embedded in a case, and then an electrolyte was injected into the case and sealed to manufacture a coin-type half-cell. As the electrolyte, an electrolyte, in which EC (ethyl carbonate) and EMC (ethyl methyl carbonate) were mixed in a volume ratio of 3:7 (EC: EMC), and a lithium salt (LiPF$_6$) was included at a concentration of 1 M, was used.

**Example 2**

A positive electrode and a coin-type half-cell were manufactured in the same manner as in Example 1, except that the composition for the insulating layer was applied and then dried in a dry room at a temperature of 25°C for about 90 minutes or so to manufacture the positive electrode.

**Comparative Example 1**

An electrode and a coin-type half-cell were manufactured in the same manner as in Example 1, except that the insulating layer was not formed.

**Comparative Example 2**

An electrode and a coin-type half-cell were manufacture in the same manner as in Example 1, except that as the composition for the insulating layer, a composition, in which PVDF (poly(vinylidene fluoride)) was dissolved in NMP (N-methyl-2-pyrrolidone), was used.

**Comparative Example 3**

An electrode and a coin-type half-cell were manufactured in the same manner as in Example 2, except that as the composition for the insulating layer, a solution, in which dried SBR (Styrene Butadiene Rubber) was dispersed in NMP (N-methyl-2-pyrrolidone) and boehmite was added thereto, as described in Preparation Example 1, which was a solution showing the bimodal particle size in Figures 2 and 3, was used.

**Test Example 1. Surface evaluation of insulating layer**

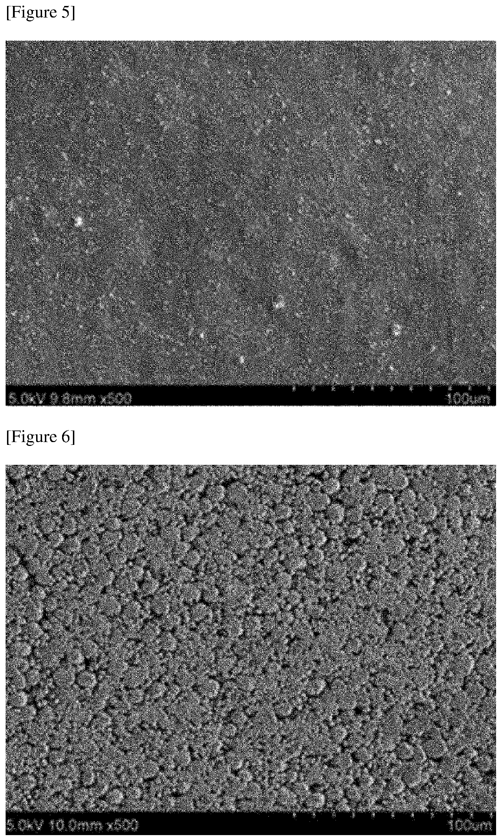

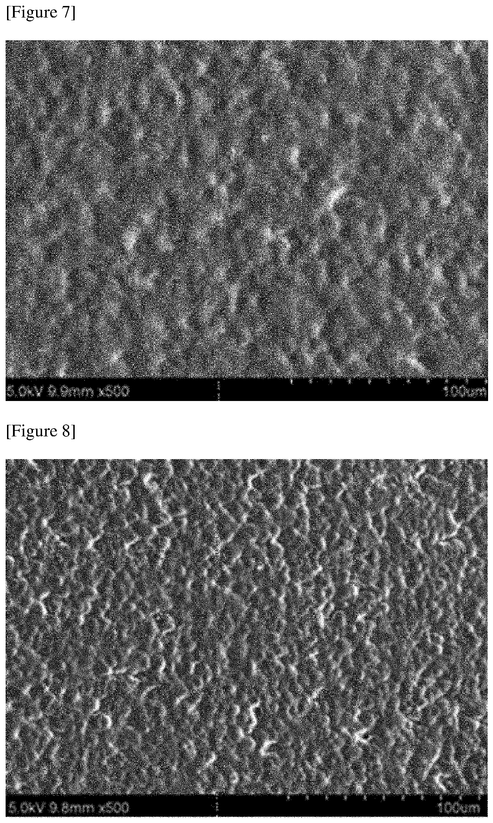

The results of observing the surfaces of the insulating layers of the respective electrodes of Examples, and Comparative Examples 2 and 3 using an SEM (scanning electron microscope) are shown in Figures 4 to 8. Figure 4 is the surface of the insulating layer of Example 1, Figure 5 is the surface of the insulating layer of Example 2, Figure 6 is the surface of the active material layer of Comparative Example 1, Figure 7 is the surface of the insulating layer of Comparative Example 2, and Figure 8 is the surface of the insulating layer of Comparative Example 3.

The surface of the insulating layer was scanned using VR-500 (manufactured by KEYENCE) as a 3D scanner, and then the characteristics analyzed by a software were summarized in Table 1. The surface of the insulating layer can be scanned using the 3D scanner, and surface characteristics can be obtained through the analysis software built into the scanner. In Table 1 below, Sa is the arithmetic mean height (unit: $\mu$m) of the insulating layer surface, Sz is the maximum height roughness (unit: $\mu$m) of the insulating layer surface, and Spc is the arithmetic mean peak curvature (unit: mm$^{-1}$) of the insulating layer surface, and Sdr is the developed interfacial area ratio of the insulating layer surface.

[Table 1]

|  | Sa | Sz | Spc | Sdr |
|---|---|---|---|---|
| Example 1 | 3.102 | 17 | 7.551 | 0.0009 |
| Example 2 | 3.262 | 20 | 31.769 | 0.0054 |
| Comparative Example 2 | 1.764 | 19.4 | 55.99 | 0.0227 |
| Comparative Example 3 | 2.460 | 15.8 | 40.53 | 0.0096 |

**Test Example 2. Measurement of peel force of insulating layer**

**(1) Dry peel force (Ad)**

The solution for the insulating layer applied in each of Examples or Comparative Examples was coated on an aluminum foil, and sufficiently dried at room temperature (about 25°C) to form an insulating layer of about 10$\mu$m or so on the foil. Subsequently, the foil on which the insulating layer was formed was punched out with a puncher to have a size of a width of about 20 mm or so and a length of about 125 mm or so, thereby preparing a specimen. The specimen was attached to a slide glass using a double-sided tape. At the time of attachment, the surface on which the insulating layer was not formed was attached to the slide glass. Here, as the double-sided tape, one having a high peel force compared to the peel force between the aluminum foil and the insulating layer is used.

The attachment was performed by attaching the specimen on the slide glass with the double-sided tape, and reciprocating ten times a roller of about 2 kg.

Subsequently, the peel force was measured by pulling one side of the insulating layer at a peel angle of 90 degrees and a peel rate of 100 mm/min using TA's UTM (Universal Testing Machine) device.

**(2) Measurement of wet peel force (Aw)**

The solution for the insulating layer applied in each of Examples or Comparative Examples was coated on an aluminum foil, and sufficiently dried at room temperature (about 25°C) to form an insulating layer with a thickness of about 10$\mu$m or so on the foil. Subsequently, the foil on which the insulating layer was formed was punched out with a puncher to have a size of a width of about 20 mm or so and a length of about 125 mm or so, thereby preparing a specimen.

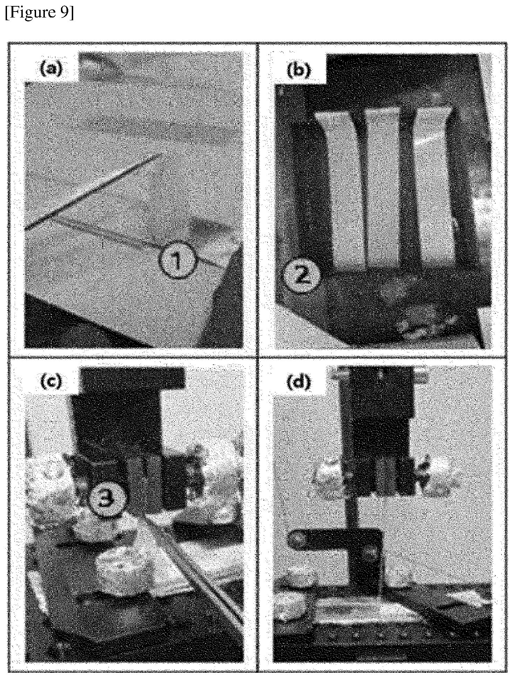

The wet peel force was evaluated in the manner shown in Figure 9.

Referring to Figure 9, first, one side end of the insulating layer in the specimen was peeled off from the foil to form a self-standing region of the insulating layer (Figure 1a). Subsequently, the specimen was immersed in the electrolyte, but the standing region was not immersed in the electrolyte (Figure 1b). Here, as the electrolyte, an electrolyte, in which DMC (Dimethyl Carbonate) and EC (Ethylene Carbonate) were mixed in a weight ratio of 1:1, and $LiPF_6$ at a concentration of 1M was dissolved in the mixture, was used. Upon the impregnation, the temperature of the electrolyte was maintained at about 25°C or so, and the impregnation was performed for 1 hour or so.

After the impregnation, the specimen was attached to a slide glass using a double-sided tape. At the time of attachment, the surface on which the insulating layer was not formed was attached to the slide glass. Here, as the double-sided tape, one having a high peel force compared to the peel force between the aluminum foil and the insulating layer is used.

The attachment was performed by attaching the specimen on the slide glass with the double-sided tape, and reciprocating ten times a roller of about 2 kg.

Subsequently, the peel force was measured by pulling one side (standing region) of the insulating layer at a peel angle of 90 degrees and a peel rate of 100 mm/min using TA's UTM (Universal Testing Machine) device (Figures 1c and 1d).

The measurement results were shown in Table 2 below.

In Table 2 below, $R_2$ is a numerical value obtained by substituting the measured dry peel force ($A_d$) and wet peel force ($A_w$) into the formula $R_2 = 100 A_w/A_d$. Also, in Table 2 below, the unit of the dry and wet peel force is gf/20 mm.

[Table 2]

|  | Dry peel force (Ad) | Wet peel force (Aw) | R2 (%) |
|---|---|---|---|
| Example 1 | 21.7 | 19.3 | 89 |
| Example 2 | 21.8 | 19.2 | 88.1 |
| Comparative Example 2 | 21.8 | 14 | 64 |
| Comparative Example 3 | 21.8 | 13 | 59.6 |

**Test Example 3. Characteristic evaluation of coin-type half-cell**

For the coin-type half-cells prepared in Examples and Comparative Examples, the discharge rate was evaluated under a 0.1C discharge condition, and the results were shown in Table 3 below. In addition, the discharge characteristics were measured at 25°C and 45°C, respectively.

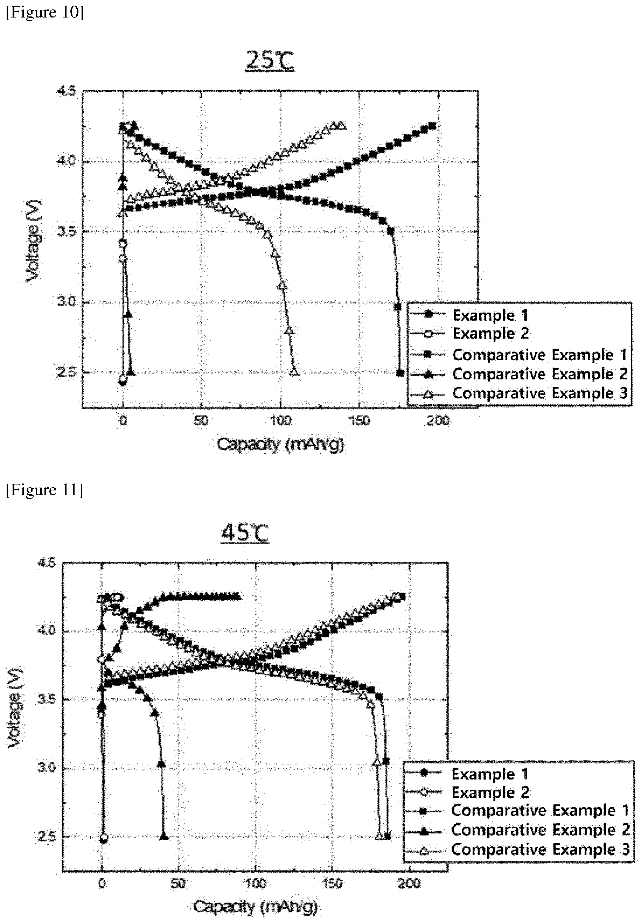

Figures 10 and 11 show the evaluation results of the discharge characteristics.

[Table 3]

|  | Discharge rate (25°C) (%) | Discharge rate (45°C) (%) |
|---|---|---|
| Example 1 | 0 | 1 |
| Example 2 | 0 | 1 |

(continued)

|  | Discharge rate (25°C) (%) | Discharge rate (45°C) (%) |
|---|---|---|
| Comparative Example 1 | 100 | 100 |
| Comparative Example 2 | 2 | 15 |
| Comparative Example 3 | 7 | 96 |

## Claims

1. An electrode comprising:

    a current collector;
    an active material layer formed on at least one side of the current collector; and
    an insulating layer formed on a surface of the current collector on which the active material layer is formed, wherein
    the surface of the insulating layer has an arithmetic average height Sa of 3 $\mu$m or more.

2. The electrode according to claim 1, wherein the active material layer is formed on a part of the region of the current collector surface, and the insulating layer is formed on at least a part of the region of the current collector surface on which the active material layer is not formed, as the current collector surface on which the active material layer is formed, and at least a part of the surface of the active material layer.

3. The electrode according to claim 1, wherein the surface of the insulating layer further satisfies one or more of the following conditions (i) to (iii):

    Condition (i): maximum height roughness (Sz) of the insulating layer surface $\geq$ 15 $\mu$m,
    Condition (ii): arithmetic average peak curvature (Spc) of the insulating layer surface $\leq$ 40 mm$^{-1}$; and
    Condition (iii): developed interfacial area ratio (Sdr) of the insulating layer surface $\leq$ 0.0009.

4. The electrode according to claim 3, further satisfying two or more of the conditions (i) to (iii).

5. The electrode according to claim 3, further satisfying all the conditions (i) to (iii).

6. The electrode according to claim 1, wherein the insulating layer comprises a binder having a solubility parameter in a range of 10 MPa$^{1/2}$ to 30 MPa$^{1/2}$.

7. The electrode according to claim 6, wherein the content of the binder in the insulating layer is in a range of 50 to 100 wt%.

8. The electrode according to claim 6, wherein the insulating layer further comprises ceramic particles.

9. The electrode according to claim 8, wherein the average particle diameter of the ceramic particles is in a range of 0.01 $\mu$m to 100 $\mu$m.

10. The electrode according to claim 8, wherein the ceramic particles are metal oxides, metalloid oxides, metal fluorides, or metal hydroxides.

11. The electrode according to claim 8, wherein the insulating layer comprise the ceramic particles in an amount of 1 to 100 parts by weight relative to 100 parts by weight of the binder.

12. The electrode according to claim 6, further comprising a compound having a dipole moment at 20°C in a range of 2.2D to 6D.

13. A method for manufacturing an electrode comprising

a step of forming an insulating layer on at least one side of a current collector using an insulating layer solution, wherein

the solution for the insulating layer comprises a step of preparing a second solution by adding a second solvent in a first solution comprising a first solvent and a binder while removing the first solvent, and

the first solvent has a dipole moment at 20°C of more than 0D and 2.5D or less, the second solvent has a dipole moment at 20°C in a range of 2.2D to 6D, and the binder has a solubility parameter in a range of 10 MPa$^{1/2}$ to 30 MPa$^{1/2}$.

14. The method for manufacturing an electrode according to claim 13, wherein the solid content of the first solution is in a range of 1% to 100%.

15. The method for manufacturing an electrode according to claim 13, wherein the removal of the first solvent or the addition of the second solvent is performed until the solid content of the second solution is in a range of 1% to 50%.

16. The method for manufacturing an electrode according to claim 13, wherein the first solvent has a boiling point in a range of 50°C to 150°C.

17. The method for manufacturing an electrode according to claim 16, wherein a difference (BP2-BP1) between the boiling point of the second solvent (BP2) and the boiling point of the first solvent (BP1) is in a range of 50°C to 150°C.

18. The method for manufacturing an electrode according to claim 13, wherein the removal rate of the first solvent is adjusted in a range of 0.5 g/min to 700 kg/min.

19. The method for manufacturing an electrode according to claim 13, wherein the addition rate of the second solvent is adjusted in a range of 0.01 kg/min to 250 kg/min.

20. A battery comprising the electrode of claim 1.

[Figure 1]

[Figure 2]

[Figure 3]

[Figure 4]

[Figure 5]

[Figure 6]

[Figure 7]

[Figure 8]

[Figure 9]

[Figure 10]

25℃

[Figure 11]

45℃

**INTERNATIONAL SEARCH REPORT**

| International application No. |
|---|
| **PCT/KR2022/017940** |

### A. CLASSIFICATION OF SUBJECT MATTER

**H01M 4/13**(2010.01)i; **H01M 10/42**(2006.01)i; **H01M 4/139**(2010.01)i; **H01M 4/04**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/13(2010.01); H01B 1/12(2006.01); H01M 10/04(2006.01); H01M 2/26(2006.01); H01M 4/02(2006.01); H01M 4/139(2010.01); H01M 4/62(2006.01); H01M 4/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 집전체(current collector), 절연층(insulating layer), 전극(electrode), 리튬 이차전지 (lithium secondary battery), 용매 치환(solvent exchange), 산술 평균 높이(arithmetical mean height)

### C. DOCUMENTS CONSIDERED TO BE RELEVANT

| Category* | Citation of document, with indication, where appropriate, of the relevant passages | Relevant to claim No. |
|---|---|---|
| X | JP 2008-282799 A (PANASONIC CORP.) 20 November 2008 (2008-11-20)<br>See paragraph [0067]; claim 1; and figure 2. | 1,2,20 |
| Y | | 3-12 |
| A | | 13-19 |
| X | JP 2014-032758 A (NIPPON ZEON CO., LTD.) 20 February 2014 (2014-02-20)<br>See paragraphs [0019], [0112]-[0129], [0186] and [0213]. | 13-19 |
| Y | | 3-12 |
| A | KR 10-2004-0030507 A (ELECON, INC.) 09 April 2004 (2004-04-09)<br>See entire document. | 1-20 |
| A | JP 2017-147148 A (SEKISUI CHEM CO., LTD.) 24 August 2017 (2017-08-24)<br>See entire document. | 1-20 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 March 2023** | **06 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| | International application No. |
|---|---|
| | **PCT/KR2022/017940** |

**C.      DOCUMENTS CONSIDERED TO BE RELEVANT**

| Category* | Citation of document, with indication, where appropriate, of the relevant passages | Relevant to claim No. |
|---|---|---|
| A | WO 2018-021128 A1 (NEC CORPORATION) 01 February 2018 (2018-02-01)<br>See entire document. | 1-20 |

Form PCT/ISA/210 (second sheet) (July 2022)

**INTERNATIONAL SEARCH REPORT**
Information on patent family members

International application No.

**PCT/KR2022/017940**

| Patent document cited in search report | | | Publication date (day/month/year) | Patent family member(s) | | | Publication date (day/month/year) |
|---|---|---|---|---|---|---|---|
| JP | 2008-282799 | A | 20 November 2008 | None | | | |
| JP | 2014-032758 | A | 20 February 2014 | None | | | |
| KR | 10-2004-0030507 | A | 09 April 2004 | EP | 1360701 | A1 | 12 November 2003 |
| | | | | EP | 1360701 | A4 | 19 January 2005 |
| | | | | JP | 2004-532292 | A | 21 October 2004 |
| | | | | US | 2003-0006401 | A1 | 09 January 2003 |
| | | | | US | 2003-0015691 | A1 | 23 January 2003 |
| | | | | US | 2003-0164477 | A1 | 04 September 2003 |
| | | | | US | 2004-0258951 | A1 | 23 December 2004 |
| | | | | US | 2004-0258952 | A1 | 23 December 2004 |
| | | | | US | 6612666 | B1 | 02 September 2003 |
| | | | | US | 6692662 | B2 | 17 February 2004 |
| | | | | US | 6692663 | B2 | 17 February 2004 |
| | | | | US | 6852250 | B2 | 08 February 2005 |
| | | | | WO | 02-067273 | A1 | 29 August 2002 |
| | | | | WO | 02-067273 | A8 | 31 October 2002 |
| JP | 2017-147148 | A | 24 August 2017 | JP | 6626361 | B2 | 25 December 2019 |
| WO | 2018-021128 | A1 | 01 February 2018 | CN | 109565069 | A | 02 April 2019 |
| | | | | CN | 109565069 | B | 20 September 2022 |
| | | | | US | 11233296 | B2 | 25 January 2022 |
| | | | | US | 2019-0157651 | A1 | 23 May 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210157005
- KR 1020220151950
- KR 1020190093522

**Non-patent literature cited in the description**

- **YANLONG LUO et al.** *J. Phys. Chem. C 2017,* 2017, vol. 121, 10163-10173
- **YANLONG LUO et al.** *J. Phys. Chem. C,* 2017, vol. 121, 10163-10173